# EUROPEAN PATENT SPECIFICATION

(11) **EP 1 092 891 B1**
(45) Date of publication and mention of the grant of the patent: **10.03.2004**
(21) Application number: 00850155.3
(22) Date of filing: 04.10.2000
(51) Int. Cl.: F16F 1/38, B60G 7/00

(54) **A brace bush**
Buchse für Strebe
Manchon à contrefiche

(30) Priority: 08.10.1999 SE 9903625
(43) Date of publication of application: 18.04.2001
(73) Proprietor: Trelleborg Aktiebolag, 231 22 Trelleborg (SE)
(72) Inventor: Landholm, Stefan, 214 22 Malmö (SE); Svensson, Nicolas, 236 34 Hollviken (SE)
(74) Representative: Preissner, Nicolaus

(56) References cited:
- EP-A- 0 351 689
- WO-A-89/04773

## Description

The present invention relates to a bush for vehicle wheel suspension braces, particularly for bracing rods included in truck pneumatic suspension systems. The bush has a metal outer sleeve, a metal central part and a rubber shock absorbing layer disposed between said sleeve and said central part and firmly vulcanised to surrounding metal surfaces, wherein the central part has a thicker midway section formed rotationally symmetrical around a long axis and substantially embraced by the outer sleeve, and two wing-like side sections that project out in the direction of said long axis.

The bracing rods are intended to fixate a wheel axle but, at the same time, allow it to move. The bushes used with such bracing rods thus function essentially as a ball bearing but with the difference that the bush has a rubber layer disposed between the moveable parts with the intention of obtaining a construction that requires no maintenance. In the case of known bushes, the central part is comprised of solid forged steel so as to achieve requisite mechanical strength properties with regard to the material used, for instance the requisite yield point. One drawback with this approach is that this part of the bush becomes unnecessarily heavy and also expensive to manufacture. Another drawback is that after being forged, it is necessary to work the central part of the bush mechanically so that it will into the bush with a predetermined tolerance. It is also necessary to provide said part with holes or channels, e.g. by drilling, for receiving fasteners by means of which the bush can be fixed in place.

Wheel suspension braces of the aforesaid kind that include a metal central part are described in W089/04773 (Saab-Scania) and in EP-A-0351689 (Jörn GmbH). These publications do not describe how the central part of the bush is produced or constructed, but merely describe its shape. As before mentioned, however, only solid central parts, often forged, are commercially available. With this exception, the aforesaid publications describe in detail the construction of these known devices and the manner in which they are assembled. In these contexts, reference can be made to these two prior publications for a greater understanding of the general function and construction of the braces and the bushes themselves.

The object of the present invention is to provide a simple and neat solution to the problem of heavy, complicated bushes that are expensive to produce, more particularly with respect to the central part of such bushes.

This object is achieved with an inventive bush that has the characteristic features set forth in the accompanying Claims.

The inventive bush thus includes a central part which is divided into two halves along a plane that extends parallel with the longitudinal axis of the bush, such that the midway section of the central part consists of two cup-shaped halves which lie in full mutual abutment with each other, and such that each of the wing-like side sections also comprises two halves. The two halves of the central part of the bush are held fixed together by fastener elements that extend through openings or slots in each side section and which are used in fitting and securing the bush. The shell of the central or midway section will suitably have a thickness of 1-7 mm.

The two side section halves may also be cupped and provided with abutment surfaces that provide mutual contact between the side sections, although they may alternatively be solid so that no interspace is formed between the sections when the bush is assembled.

In one embodiment of the invention, which is sometimes preferred from the aspect of manufacture, those parts of the central-part halves that are in mutual contact may have planar contact surfaces. Alternatively, these contact surfaces may be inclined if so desired, such as to prevent said halves from being displaced (pushed) relative to one another. The contact surfaces may also include grooves or be given some other geometry that can further facilitate precise positioning of said halves in relation to each other when fitting the bush.

Each half of the central-part and its side sections may be forged as an integral unit, as in the case of earlier known conventional bushes, although an important advantage afforded by the invention is that the central part can be made of sheet metal, in which case each half of said central-part and its side sections can be formed as an integral unit by being pressed from metal sheet, wherewith the openings or slots required in the side sections may conveniently be formed by the press tool at the same time.

When the side sections are in the form of shell-like structures, support blocks, preferably sintered or die-cast metal blocks, may be disposed between the side-section halves so as to avoid collapsing of said halves when subjected to shear forces.

Despite the inventive bush having a central part which is divided into two halves, the bush as a whole will have the necessary mechanical strength properties, similar to a bush made of solid material. The two halves of the central part are namely fixed together with the fastener devices, e.g. screws or bolts, that are used when anchoring the bush to the brace, and at least the central or midway section of the central part is constructed so that said two halves will be in contact with each other, wherewith the loads acting on said part will be distributed to both halves thereof. In certain cases the bush will be subjected to loads that act in the screw direction, this being the normal case, although the bush may also be subjected to heavy loads that act in a direction transversely to the screws. The bush is then prevented from sliding on the underlying surface by friction. In these cases, the dimensions of the screws are increased in relation to this normal loading condition, in order to obtain sufficiently high friction. The sheet metal alternative with support blocks in the form of sintered metal is suitable in this respect. The sintered parts can be readily formed to fit in grooves, slots or like openings on accommodating surfaces.

The invention will now be described in more detail with reference to the accompanying drawings, in which Figure 1 illustrates an assembled bush; Figure 2 illustrates a preferred embodiment of one half of a central part obliquely from one side; and Figure 3 is a similar view illustrating another preferred embodiment of one half of a central bush-part.

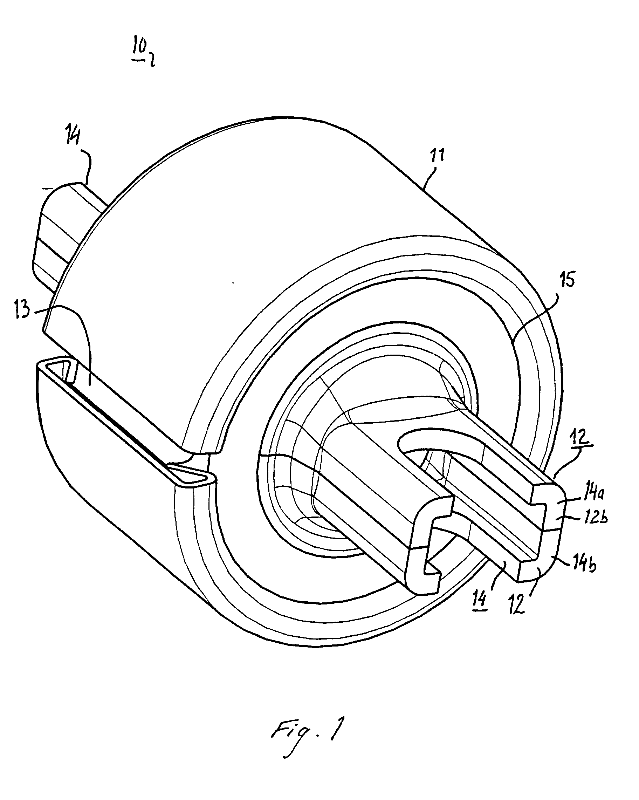

Figure 1 illustrates a preferred embodiment of an inventive bush 10. The bush 10 comprises an outer metal sleeve 11 which has a springing function in the illustrated case and which embraces a central part 12 that comprises two halves 12a,b. Disposed between the outer sleeve 11 and the central part 12 is a rubber layer 13 which is vulcanised firmly to the inner metal surface of the outer sleeve 11 and also to the central part 12. The side sections 14 of the illustrated central part are divided into two parallel halves 14a,b that extend parallel to the longitudinal axis of the bush and that are in full contact with one another along the entire parting surface.

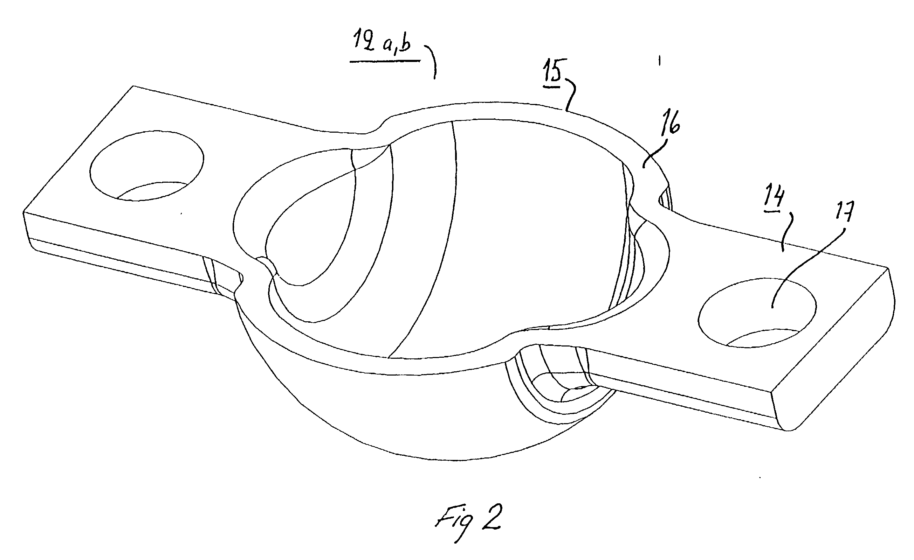

Figure 2 illustrates an embodiment of one half 12a,b of the central part, which half may be forged and the side sections 14 may be solid. The midway section 15 of the illustrated half has a generally hemispherical shape, although it may have other rotational-symmetrical shapes around said long axis that are non-spherical without deviating from the inventive concept. In the illustrated case, each half 12a,b has flat contact surfaces 16, although said surfaces may be inclined or have some other shape and may be provided with grooves or the like but nevertheless constructed for intimate contact with each other without departing from the inventive concept. The wall of the shell-like midway section 15 may have a thickness of 1-5 mm. Each side section 14 includes a hole 17 for receiving fastener means, such as screws for instance.

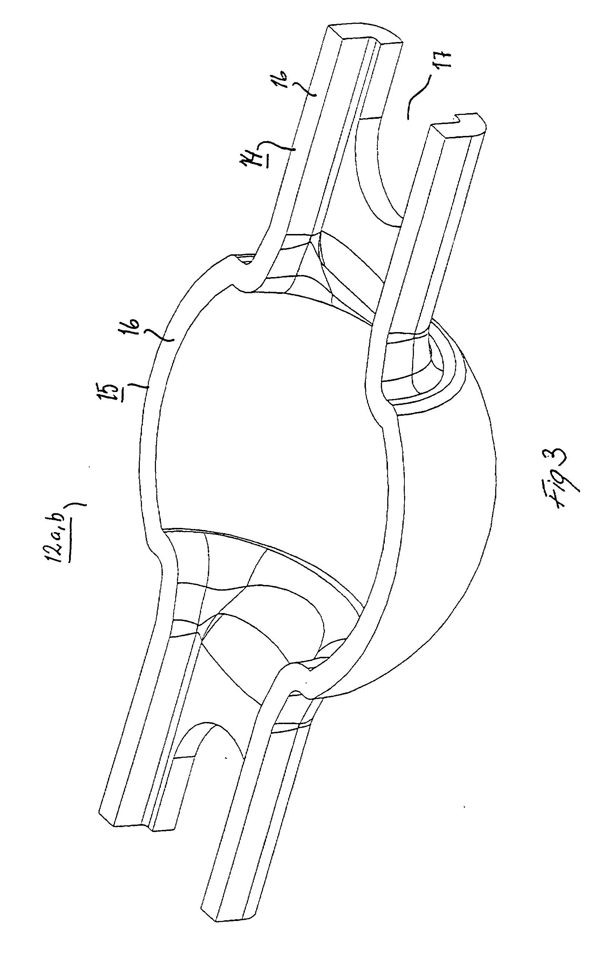

Figure 3 illustrates another preferred embodiment which can be conveniently pressed from sheet metal. The Figure 3 embodiment includes the same components as the Figure 2 embodiment, with the exception that the side section 14 is not solid but is, instead, formed as an integral part of a sheet metal shell having the same wall thickness as the midway section 15. Each side section 14 includes a groove or recess 17 for receiving fastener devices such as screws, for instance. Although not shown, it may be desirable in the case of this embodiment to provide supporting blocks of sintered metal or the like in the space formed between the cup-shaped halves of the side sections.

## Claims

1. A bush (10) intended for vehicle wheel suspension braces or struts and particularly for use in pneumatic suspension systems for trucks, wherein the bush comprises an outer metal sleeve (11), a metal central part (12), and a rubber shock absorbing layer (13) disposed between the sleeve and the central part and vulcanised to surrounding metal surfaces, and wherein the central part (12) has a thicker midway section (15) formed rotationally symmetrical about a longitudinal axis and embraced generally by the outer sleeve (11), and wherein said bush also includes two wing-like side sections (14) that project out in the direction of said longitudinal axis, **characterised in that** the central part (12) is divided into two halves (12a,b) along a plane that extends parallel with said longitudinal axis, such that said midway section (15) comprises two cupped halves which are placed together with full mutual contact therebetween, and such that each of said wing-like side sections (14) also comprises two halves; and **in that** the two halves (12a,b) of the central part are held fixed together with fastener devices that extend through openings or slots (17) in each side section (14).

2. A bush according to Claim 1, **characterised in that** the two halves (14a,b) of the side sections are also cup-shaped and provided with abutment surfaces that afford mutual contact between respective halves of the side sections (14).

3. A bush according to Claim 1 or 2, **characterised in that** those portions of the halves (12a,b) of said central part that are in mutual contact have planar contact surfaces (16).

4. A bush according to Claim 1 or 2, **characterised in that** those portions of the halves (12a,b) of said central part that are in mutual contact have oblique contact surfaces or other non-planar contact surfaces (16).

5. A bush according to any one of Claims 1-4, **characterised in that** each central-part half (12a,b) and its side sections (14a,b) are forged as an integral structure.

6. A bush according to any one of Claims 1-4, **characterised in that** each central-part half (12a,b) and its side sections (14a,b) are pressed as an integral structure from sheet metal.

7. A bush according to any one of Claims 2-6, **characterised by** support blocks disposed between respective halves (14a,b) of said side sections, said blocks preferably being comprised of sintered or die-cast metal.

8. A bush according to any one of Claims 1-7, **characterised in that** said midway section (15) has a wall thickness of between 1 and 7 mm.

## Patentansprüche

1. Buchse (10) für Streben oder Stützen der Radaufhängung von Fahrzeugen und insbesondere zur Anwendung in luftgefederten Aufhängungssystemen für LKWs, wobei die Buchse eine äußere metallene Hülse (11), ein metallenes mittiges Teil (12), eine stoßdämpfende Gummischicht (13), die zwischen der Hülse und dem mittigen Teil angeordnet ist und an die umliegenden Metalloberflächen vulkanisiert ist, und wobei das mittige Teil (12) einen dickeren Mittelbereich aufweist (15), welcher rotationssymmetrisch um die Längsachse geformt ist und im wesentlichen von der äußeren Hülse (11) umfasst wird, und wobei die Buchse auch zwei flügelartige Seitenteile (14) aufweist, die sich in Richtung der Längsachse erstrecken, **dadurch gekennzeichnet, dass** das mittige Teil (12) in zwei Hälften (12a,b) entlang einer Fläche, welche sich parallel zur genannten Längsachse ausdehnt, geteilt ist, so dass der genannte Mittelbereich (15) zwei hohle Hälften aufweist, welche mit vollständigem gegenseitigen Kontakt dazwischen zusammengefügt werden, und so dass jedes der beiden flügelartigen Seitenteile (14) ebenfalls zwei Hälften enthält, und wobei die beiden genannten Hälften (12a,b) des mittigen Teiles durch Befestigungsteile fest zusammengehalten werden, welche sich durch Öffnungen oder Schlitze (17) in jedem Seitenteil (14) erstrecken.

2. Buchse nach Anspruch 1, **dadurch gekennzeichnet, dass** die beiden Hälften (14a,b) der Seitenteile auch topfförmig ausgestaltet sind und mit Anschlagflächen versehen sind, die den gegenseitigen Kontakt zwischen den jeweiligen Hälften der Seitenteile (14) ermöglichen.

3. Buchse nach Anspruch 1 oder 2, **dadurch gekennzeichnet, dass** die Teile der Hälften (12a,b) des genannten mittigen Teiles, die gegenseitigen Kontakt haben, planare Kontaktflächen (16) aufweisen.

4. Buchse nach Anspruch 1 oder 2, **dadurch gekennzeichnet, dass** die Teile der Hälften (12a,b) des genannten mittigen Teiles, die gegenseitigen Kontakt haben, schiefe Kontaktflächen oder andere nicht planare Kontaktflächen (16) aufweisen.

5. Buchse nach einem der Ansprüche 1 bis 4, **dadurch gekennzeichnet, dass** jede Hälfte des mittigen Teiles (12a,b) und deren Seitenteile (14a,b) als eine integrale Struktur geschmiedet sind.

6. Buchse nach einem der Ansprüche 1 bis 4, **dadurch gekennzeichnet, dass** jede Hälfte des mittigen Teiles (12a,b) und deren Seitenteile (14a,b) als eine integrale Struktur aus Blech gepresst sind.

7. Buchse nach einem der Ansprüche 2 bis 6, **dadurch gekennzeichnet, dass** Stützblöcke zwischen den jeweiligen Hälften (14a,b) genannter Seitenteile angebracht sind, wobei die Blöcke vorzugsweise aus Sintermetall oder Druckgussmetall bestehen.

8. Buchse nach einem der Ansprüche 1 bis 7, **dadurch gekennzeichnet, dass** der Mittelbereich (15) eine Wanddicke zwischen 1 mm und 7 mm aufweist.

## Revendications

1. Manchon (10) destiné à des tirants ou des entretoises de suspension de roue dans un véhicule, et en particulier pour l'utilisation dans des systèmes de suspension pneumatiques pour des camions, dans lequel le manchon comprend un fourreau métallique extérieur (11), une partie centrale métallique (12), et une couche d'absorption de choc (13) en caoutchouc disposée entre le fourreau et la partie centrale et vulcanisée sur les surfaces métalliques avoisinantes, et dans lequel la partie centrale (12) possède une section médiane (15) plus épaisse et formée avec symétrie de révolution autour d'un axe longitudinal et entourée généralement par le fourreau extérieur (11), et dans lequel ledit manchon inclut aussi deux sections latérales (14) analogues à des ailes qui se projettent dans la direction dudit axe longitudinal, **caractérisé en ce que** la partie centrale (12) est divisée en deux moitiés (12a, 12b) le long d'un plan qui s'étend parallèlement audit axe longitudinal, de telle façon que ladite section médiane (15) comprend deux moitiés en forme de coupelle qui sont placées ensemble avec un contact mutuel total entre elles, et de telle façon que chacune desdites sections latérales (14) analogue à une aile comprend aussi deux moitiés ; et **en ce que** les deux moitiés (12a, 12b) de la partie centrale sont maintenues fixées ensemble avec des dispositifs de fixation qui s'étendent à travers des ouvertures ou des fentes (17) dans chaque section latérale (14).

2. Manchon selon la revendication 1, **caractérisé en ce que** les deux moitiés (14a, 14b) des sections latérales sont également en forme de coupelle et pourvues de surfaces de butée qui assurent un contact mutuel entre des moitiés respectives des sections latérales (14).

3. Manchon selon l'une ou l'autre des revendications 1 et 2, **caractérisé en ce que** celles des portions des moitiés (12a, 12b) de ladite partie centrale qui sont en contact mutuel possèdent des surfaces de contact planes (16).

4. Manchon selon l'une ou l'autre des revendications 1 et 2, **caractérisé en ce que** celles des portions des moitiés (12a, 12b) de ladite partie centrale qui sont en contact mutuel possèdent des surfaces de contact obliques ou d'autres surfaces de contact non planes (16).

5. Manchon selon l'une quelconque des revendications 1 à 4, **caractérisé en ce que** chaque moitié (12a, 12b) de partie centrale et ses sections latérales (14a, 14b) sont forgées sous forme d'une structure intégrale.

6. Manchon selon l'une quelconque des revendications 1 à 4, **caractérisée en ce que** chaque moitié (12a, 12b) de partie centrale et ses sections latérales (14a, 14b) sont pressées à partir de tôle métallique sous forme d'une structure intégrale.

7. Manchon selon l'une quelconque des revendications 2 à 6, **caractérisé par** des blocs de support disposés entre des moitiés respectives (14a, 14b) desdites sections latérales, lesdits blocs étant de préférence composés de métal fritté ou de métal de fonderie.

8. Manchon selon l'une quelconque des revendications 1 à 7, **caractérisé en ce que** la section médiane (15) a une épaisseur de paroi comprise entre 1 et 7 mm.
